# EUROPEAN PATENT SPECIFICATION

(11) **EP 2 767 815 B1**
(45) Date of publication and mention of the grant of the patent: **20.06.2018**
(21) Application number: 13155614.4
(22) Date of filing: 18.02.2013
(51) Int. Cl.: G01M 13/02, F16H 57/00, G05B 23/02, G07C 5/00

(54) **System for monitoring the wear of the gears of a vehicle transmission**
System zur Überwachung des Verschleißes der Zahnräder eines Fahrzeuggetriebes
Système de surveillance de l'usure des engrenages d'une transmission de véhicule

(43) Date of publication of application: 20.08.2014
(73) Proprietor: IVECO S.p.A., 10156 Torino (IT)
(72) Inventor: Labella, Saverio, 10034 Chivasso (IT); Lomaestro, Massimo, 10045 Piossasco (IT); Varalda, Orlando, 10088 Volpiano (IT)
(74) Representative: Franzolin, Luigi

(56) References cited:
- WO-A2-2004/078543
- WO-A2-2009/133161
- US-A1- 2002 095 985
- US-A1- 2004 122 618

## Description

### Application field of the invention

The present invention refers to the field of vehicle diagnostic systems and more precisely to the wear of the gears of a vehicle transmission.

An example of gear monitoring system is given in US2002095985, whose features are in the preamble of claim 1.

### Description of the prior art

In synchronized transmissions, two shafts, a driving one and a driven one, are arranged in parallel to each other. The driving one is connected to the clutch and the driven one is connected to the transmission shaft. Pairs of gears are mounted between the two shafts, each pair defining a gear ratio. All the gear pairs are constantly in mesh with each other, but only one gear pair at a time connects the driving shaft to the driven shaft.

In heavy vehicles, due to the relevant masses at stake, the gearbox ratio has to be defined in relation to the type of mission in which the vehicle is intended to be used, in order to avoid the transmission to be subject to failures or to an early wear.

For example, a vehicle intended to be used for garbage collection is subject to frequent subsequent stops, travelling with very low speed.

It is evident that the gears of the first speed of the gearbox are more stressed than the others.

In addition, the driver may decide to start with a too high gear in relation to the overall mass of the vehicle and/or to the slope of the road, requiring the engaged gear to transfer a higher torque than a nominal one.

### Summary of the invention

Therefore the aim of the present invention is to overcome all the aforementioned drawbacks and to provide a method for monitoring the wear of the gears of a vehicle transmission.

The object of the present invention is a method for monitoring the wear of the gears of a vehicle transmission in accordance with claim 1.

A system for monitoring the wear of the gears is also object of the present invention.

Said system can be fully or partially integrated in a vehicle or partially integrated in an external diagnostic device.

A ground vehicle comprising the aforementioned device for monitoring the wear of the gears is also object of the present invention.

The claims are an integral part of the present description. In the following, the operating time of a gear will refer to the time in which the gear is "in mesh", namely it transfers the torque from the engine to the driveline.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:

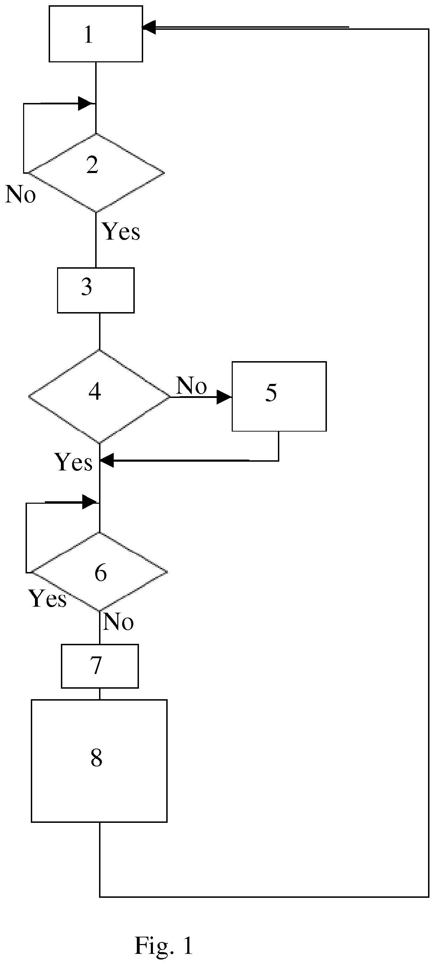

figure 1 shows a block diagram of a preferred alternative embodiment of the method that is object the present invention.

The blocks are intended to correspond to logical functions carried out by the apparatus realizing them.

In the figures the same reference numbers and letters identify the same elements or components.

### Detailed description of preferred embodiments of the invention

The description that follows refers to the method that is object of the invention, which allows to monitor the wear of the gears of a vehicle transmission.

According to the present invention, the operating time of each gear is monitored.

According to the invention, also the driving torque provided by the engine during the activation of each gear is continuously monitored and, gear by gear, an integral of the driving torque that globally passes through the gear from the engine to one or more driving axles.

The integral of the torque in the operating time, in fact, allows to obtain an indicator of the energy to which each gear has been subject during the life of the vehicle.

It is evident that, for each gear of the transmission, the torque that passes through it is put in relation with the operating time. The torque can be calculated separately from the time, or the energy can be calculated without separately store torque and time.

The operating time interval of each gear can be derived in many ways, for example, the instants of release and of activation of the clutch pedal can indicate, respectively, a start and an end instant of the operating time of a gear, while the gear itself can be directly identified if the gear shift is equipped with appropriate sensors.

According to the invention, the gear is identified indirectly, dividing the speed of the vehicle by the revolutions per minute of the engine. Such value, indeed, after the full closing of the clutch, is constant. Thus, the operating time interval of a determined gear can be identified by the time interval wherein said ratio is constant, while the numerical value of the ratio indicates the ratio itself.

It is worth noting that such solution proves to be very advantageous, since it does not need the installation of particular sensors, since modern vehicles are already equipped with a CAN vehicle network by which messages containing both the data on engine revolutions per minute and on vehicle speed are exchanged.

The preferred embodiments of the method, described above, can be summarized in detail with the help of figure 1:
- step 1: acquisition of vehicular signals, such as:
   o an activation/release state of the clutch pedal and an identifier of the gear engaged and/or
   o a vehicle speed and an engine rpm
   o a driving torque delivered by the engine,
- step 2: check/waiting until a gear is engaged and the clutch pedal is released or check/waiting until the vehicle-speed/engine-rpm ratio is constant, once the check is passed
- step 3: start counting the operating time of the i-th gear and/or of the torque delivered by the engine,
- step 4 (optional): if said i-th ratio is engaged for the first time, for example because it is the first time that the vehicle-speed/engine-rpm ratio is constant, then
- step 5 (optional): storage of said i-th ratio;
- step 6: check/waiting until a said clutch pedal is still engaged or until the vehicle-speed/engine-rpm ratio is constant, once the check is no longer passed
- step 7: end counting the operating time of the i-th gear and/or of the torque delivered by the engine,
- step 8: calculation of a total operating time of said i-th gear and/or of an integral of the overall torque transferred by means of said i-th ratio, in the total operating time of said i-th ratio.

The method is carried out in a cyclical and continuous way, thus starting again from the first step.

Advantageously, a limit energy of use of each gear can be defined when designing the gearbox, thus it is possible to constantly compare the limit energy of each gear ratio with the energy that is globally transferred by the same ratio, both for estimating the remaining life of the gear itself, and for identifying a wrong mission assigned to the gearbox.

Indeed, if there is a too high difference between the remaining life of a gear with respect to the other gears, it is possible to identify it immediately, for example already during the first vehicle service.

This allows, for example, to replace the gearbox adapting it to the mission of the vehicle, and to avoid having to stop the vehicle for extraordinary repairs in the future.

A part of or the whole method that is object of the present invention can be carried out by the vehicle control unit, such as for example the engine control unit. As an alternative, the engine control unit can just collect the data, such as the operating time of each gear and the torque delivered by the engine during such operating time. The remaining calculations, such as the estimation of a failure time of the gearbox, or the analysis of the correctness of the matching gearbox/mission of the vehicle, can be carried out by a diagnostic device external to the vehicle, that can be connected to the vehicle by means, for example, of the EOBD socket, or by means of a vehicular gateway allowing the remote access to the vehicle memory where the aforementioned data are stored.

Furthermore, the transmission can be of any time, namely manual, automatic or automated manual. In case of automatic transmission, the operating time of a gear can be obtained by the control unit managing the transmission.

The present invention may advantageously be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

It will be apparent to the person skilled in the art that other alternative embodiments of the invention can be conceived and reduced to practice without departing from the scope of the invention.

From the description set forth above it will be possible for the person skilled in the art to embody the invention with no need of describing further construction details. The elements and the characteristics described in the different preferred embodiments may be combined without departing from the scope of the present application.

## Claims

1. Method for monitoring the wear of the gears of a vehicle transmission comprising the following steps
- measuring (i) an operating time of at least a gear;
- detecting (ii) a driving torque delivered by a vehicle engine and transmitted by means of said at least a gear during said operating time;
- calculating (iii) a total energy passed through said gear as an integral of said torque delivered by the engine during said operating time of the gearbox ratio for estimating the remaining life of the gear itself;
the method further comprising the step of comparing remaining lives of one or more gears of the same transmission; and
reporting an error in matching said transmission to a mission of the vehicle,
**characterized in that** said operating time interval of said gear is derived by detecting (iv) a release instant and (v) a subsequent activation instant of a pedal of a vehicle clutch;
wherein said gear is identified (vii) by dividing a current speed value of the vehicle with a current revolutions per minute value of a vehicle engine; wherein said operating time interval of said gear is acquired (viii) as a time wherein a numerical value of said division is constant in time.

2. Method according to claim 1, further comprising the following steps in a sequence:
- (step 1) acquisition of vehicular signals such as:
o an activation/release state of the clutch pedal and an identifier of the gear engaged and/or
o a vehicle speed and an engine rpm and
o a driving torque delivered by the engine,
- (step 2) check/waiting until a gear is engaged and the clutch pedal is released or check/waiting until the vehicle-speed/engine-rpm ratio is constant, once the check is passed
- (start 3) start counting the operating time of the i-th gear and/or of the torque delivered by the engine,
- (step 6) check/waiting until a said clutch pedal is still engaged or until the vehicle-speed/engine-rpm ratio is constant, once the check is no longer passed then
- (start 7) end counting the operating time of the i-th gear and/or of the torque delivered by the engine,
- (step 8) calculation of a total operating time of said i-th gear and/or of an integral of the overall torque transferred by means of said i-th gear, in the total operating time of said i-th gear.

3. System for monitoring the wear of the gearbox ratios comprising processing means configured to carry out all the steps (i - viii, 1 - 6) of one of the claims 1 or 2.

4. System according to claim 3, further comprising means for detecting an activation/release of a pedal of a vehicle clutch.

## Patentansprüche

1. Verfahren zur Überwachung des Verschleißes der Zahnräder eines Fahrzeuggetriebes, umfassend die folgenden Schritte:
- Messung (i) der Betriebsdauer von mindestens einem Zahnrad;
- Detektion (ii) des Antriebsdrehmoments, welches von einem Fahrzeugmotor erzeugt und mindestens über das genannte Zahnrad übertragen wird, während besagter Betriebsdauer;
- Berechnung (iii) der gesamten Energie, die durch besagtes Zahnrad übertragen wird, als Integral des Antriebsdrehmoments des Motors über die besagte Betriebsdauer der Getriebeübersetzung zur Schätzung der verbleibenden Lebenszeit des Zahnrads;
welches Verfahren außerdem einen Schritt zum Vergleich der verbleibenden Lebenszeiten eines oder mehrerer Zahnräder des gleichen Getriebes beinhaltet;
und Meldung eines Fehlers bezüglich der Abstimmung von besagtem Getriebe und Nutzung des Fahrzeugs,
**dadurch gekennzeichnet, dass** das besagte Betriebszeitintervall des besagten Zahnrads von der Erfassung (iv) eines Lösemoments und (v) eines darauffolgenden Betätigungsmoments eines Pedals einer Fahrzeugkupplung abgeleitet wird,
wobei das besagte Zahnrad dadurch identifiziert wird (vii), dass eine momentane Fahrzeuggeschwindigkeit durch eine momentane Umdrehungszahl des Fahrzeugmotors pro Minute dividiert wird;
und das besagte Betriebszeitintervall des besagten Zahnrads bestimmt wird (viii) als eine Zeit, in der ein numerischer Wert der genannten Division zeitlich konstant bleibt.

2. Verfahren gemäß Anspruch 1, ferner umfassend die folgenden aufeinander folgenden Schritte:
- (Schritt 1) Erfassung von Fahrzeugsignalen wie:
• ein Betätigungs-/Lösezustand des Kupplungspedals und eines Identifizierers des Eingriffs des Zahnrads und/oder
• eine Fahrzeuggeschwindigkeit und eine Motorumdrehungszahl pro Minute, und
• das durch den Motor erzeugte Antriebsdrehmoment,
- (Schritt 2) Überprüfen/Abwarten, bis ein Zahnrad verwendet und das Kupplungspedal gelöst wird, oder Überprüfen/Abwarten, bis das Verhältnis Fahrzeuggeschwindigkeit /Motorumdrehungszahl pro Minute konstant ist, und wenn die Überprüfung postitiv abgeschlossen ist:
- (Schritt 3) Beginnen mit der Messung der Betriebsdauer des i-ten Zahnrades und/oder des Motordrehmoments,
- (Schritt 6) Überprüfen/Abwarten, solange das Kupplungspedal noch betätigt ist oder bis das Verhältnis Fahrzeuggeschwindigkeit/Motorumdrehungszahl pro Minute konstant ist, und sobald diese Bedingungen nicht mehr erfüllt sind:
- (Schritt 7) Beenden der Messung der Betriebsdauer des i-ten Zahnrads und/oder des Motordrehmoments, und anschließend
- (Schritt 8) Berechnen der gesamten Betriebsdauer des besagten i-ten Zahnrads und/oder eines Integrals des gesamten, durch das i-te Zahnrad übertragenen Drehmoments über die Betriebsdauer des i-ten Zahnrads.

3. System zur Überwachung des Verschleißes der Getriebeübersetzung, welches Verarbeitungsmittel umfasst, die so konfiguriert sind, dass sie alle Schritte (i-viii, 1-6) aus einem der Ansprüche 1 und 2 durchführen können.

4. System gemäß Anspruch 3, welches außerdem Mittel zur Erkennung des Betätigungs-/Lösezustands eines Pedals einer Fahrzeugkupplung umfasst.

## Revendications

1. Méthode pour contrôler l'usure des engrenages d'une transmission de véhicule comprenant les étapes suivantes
- la mesure (i) d'un temps de fonctionnement d'au moins un engrenage ;
- la détection (ii) d'un couple d'entraînement délivré par un moteur de véhicule et transmis au moyen dudit au moins un engrenage durant ledit temps de fonctionnement ;
- le calcul (iii) d'une énergie totale passée à travers ledit engrenage en tant qu'intégrale dudit couple délivré par le moteur durant ledit temps de fonctionnement du rapport de boîte de vitesses pour estimer la durée de vie restante de l'engrenage lui-même ;
la méthode comprenant en outre l'étape de comparaison de durées de vie restantes d'un ou de plusieurs engrenages de la même transmission ; et
de rapport d'une erreur de mise en correspondance de ladite transmission à une mission du véhicule,
**caractérisée en ce que** ledit intervalle de temps de fonctionnement dudit engrenage est dérivé en détectant (iv) un instant de relâchement et (v) un instant d'activation ultérieur à une pédale d'un embrayage de véhicule ;
dans laquelle ledit engrenage est identifié (vii) en divisant une valeur de vitesse actuelle du véhicule avec une valeur de tours par minute actuelle d'un moteur de véhicule ; dans laquelle ledit intervalle de temps de fonctionnement dudit engrenage est acquis (viii) en tant que temps dans lequel une valeur numérique de ladite division est constante dans le temps.

2. Méthode selon la revendication 1, comprenant en outre les étapes suivantes dans une séquence :
- (étape 1) acquisition de signaux de véhicule tels que :
∘ un état d'activation/relâchement de la pédale d'embrayage et un identifiant de l'engrenage en prise et/ou
∘ une vitesse de véhicule et un nombre de tours par minute du moteur et
∘ un couple d'entraînement délivré par le moteur,
- (étape 2) vérification/attente jusqu'à ce qu'un engrenage soit mis en prise et que la pédale d'embrayage soit relâchée ou vérification/attente jusqu'à ce que le rapport vitesse de véhicule/nombre de tours par minute du moteur soit constant, une fois que la vérification est réussie
- (départ 3) début du comptage du temps de fonctionnement du i^{ème} engrenage et/ou du couple délivré par le moteur,
- (étape 6) vérification/attente jusqu'à ce qu'une dite pédale d'embrayage soit toujours en prise ou jusqu'à ce que le rapport vitesse de véhicule/nombre de tours par minute du moteur soit constant, une fois que la vérification n'est plus réussie puis
- (départ 7) fin du comptage du temps de fonctionnement du i^{ème} engrenage et/ou du couple délivrée par le moteur,
- (étape 8) calcul d'un temps de fonctionnement total dudit i^{ème} engrenage et/ou d'une intégrale du couple global transférée au moyen dudit i^{ème} engrenage, dans le temps de fonctionnement total dudit i^{ème} engrenage.

3. Système pour contrôler l'usure des rapports de boîte de vitesses comprenant un moyen de traitement configuré pour réaliser toutes les étapes (i-viii, 1-6) selon l'une des revendications 1 ou 2.

4. Système selon la revendication 3, comprenant en outre un moyen pour détecter une activation/relâchement d'une pédale d'un embrayage de véhicule.
